Europäisches Patentamt

European Patent Office

Office européen des brevets

(19)

(11) Numéro de publication: **0 061 719**
**B1**

(12) **FASCICULE DE BREVET EUROPEEN**

(45) Date de publication du fascicule du brevet: **06.11.85**

(21) Numéro de dépôt: **82102471.8**

(22) Date de dépôt: **25.03.82**

(51) Int. Cl.⁴: $G\ 02\ B\ 5/10$, $G\ 02\ B\ 7/18$, $G\ 02\ F\ 1/01$

(54) Dispositif pour augmenter l'éclairement produit par un faisceau laser.

(30) Priorité: **31.03.81 FR 8106441**

(43) Date de publication de la demande:
**06.10.82 Bulletin 82/40**

(45) Mention de la délivrance du brevet:
**06.11.85 Bulletin 85/45**

(84) Etats contractants désignés:
**BE CH DE FR GB IT LI NL SE**

(56) Documents cités:
**DE-A-2 631 551**
**FR-A-2 368 054**
**US-A-3 904 274**
**US-A-4 190 327**

(73) Titulaire: **COMPAGNIE GENERALE D'ELECTRICITE Société anonyme dite:**
**54, rue La Boétie**
**F-75382 Paris Cedex 08 (FR)**

(72) Inventeur: **Duchet, Michel**
**5, rue des Peupliers**
**F-91640 Briis-Sous-Forges (FR)**

(74) Mandataire: **Weinmiller, Jürgen et al**
**Zeppelinstrasse 63**
**D-8000 München 80 (DE)**

Courier Press, Leamington Spa, England.

## Description

La présente invention concerne un dispositif pour augmenter l'éclairement produit par un faisceau laser.

On sait que le front d'onde d'un faisceau laser peut présenter des défauts de planéité statiques ou dynamiques. De plus un faisceau laser se propageant vers une cible peut être affecté de distorsions de phase provoquées par exemple par des turbulences atmosphériques. Ces défauts et ces distorsions entrainent une diminution d'éclairement.

Un dispositif connu, par exemple à partir du document FR—A—23 68 054, pour augmenter l'éclairement produit par un faisceau laser sur une cible comporte un miroir à surface réfléchissante déformable capable de réfléchir un faisceau laser vers une cible, un récepteur photoélectrique apte à détecter l'énergie du faisceau renvoyée par la cible, un circuit de traitement relié à la sortie du récepteur et une pluralité d'éléments piézoélectriques fixés d'une part sur la surface du miroir et d'autre part sur une plaque rigide, les électrodes des éléments piézoélectriques étant connectées à la sortie du circuit de traitement. Le circuit de traitement délivre des signaux de polarisation des électrodes de façon à provoquer une déformation de la surface réfléchissante du miroir. Cette déformation corrige le front d'onde du faisceau réfléchi par le miroir, de manière à augmenter l'énergie détectée par le récepteur.

Mais le dispositif connu décrit ci-dessus présente un inconvénient: dans certaines applications, il est difficile d'obtenir des déformations de miroir d'amplitude convenable.

On connaît en outre, par exemple à partir du document US—A—4.190.327, un dispositif selon le préambule de la revendication 1 comportant un miroir déformable, qui peut être appliqué à la focalisation d'un faisceau laser. Le miroir est muni d'un système de commande hydraulique fonctionnant en réducteur de déplacement. Cependant, ce système procure une réduction de l'amplitude du mouvement qui est encore trop faible pour certains cas d'application. Il en résulte une déformation trop grossière du miroir en réponse à des signaux de commande.

L'invention a pour but de présenter un dispositif de ce type permettant d'adapter les amplitudes de déformation du miroir aux différentes conditions d'application qui peuvent se présenter.

Ce but est atteint selon l'invention par un dispositif tel qu'il est défini dans la partie caractéristique de la revendication 1.

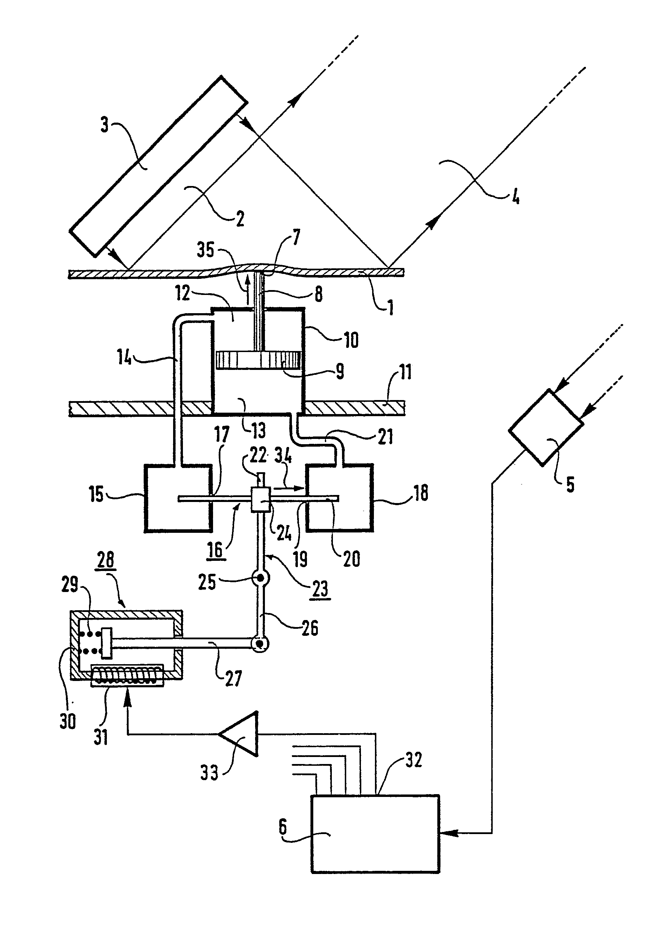

Plusieurs formes particulières d'exécution de l'objet de la présente invention sont décrites ci-dessous, à titre d'exemple, en référence au dessin annexé dans lequel la figure unique représente schématiquement un mode de réalisation du dispositif selon l'invention.

Sur cette figure, un miroir comportant une feuille métallique polie 1 réfléchit un faisceau 2 émis par un générateur laser 3. Le faisceau réfléchi 4 est dirigé vers une cible non représentée. La cible renvoie une partie du faisceau 4 sur un récepteur photoélectrique 5 relié à l'entrée d'un circuit de traitement 6. En un point 7 de la feuille 1, du côté opposé à la surface réfléchissante, est fixée une extrémité d'une barre 8 dont l'autre extrémité est fixée sur un piston 9 coulissant axialement dans un cylindre 10. La paroi extérieure du cylindre 10 est solidaire d'une plaque rigide 11 sensiblement parallèle à la surface 1.

Le piston 9 divise le volume interne du cylindre 10 en deux parties 12 et 13. La partie 12, située du côté de la barre 8, est en communication par une canalisation 14 avec le volume interne d'un réservoir 15. Une tige 16 traverse la paroi du réservoir 15 par un orifice 17, de sorte qu'une extrémité de la tige 16 est située dans le réservoir 15. La tige 16 traverse aussi la paroi d'un autre réservoir 18 par un orifice 19, de sorte que l'autre extrémité 20 de la tige 15 est située dans le réservoir 18. Une canalisation 21 met en communication le volume interne du réservoir 18 avec l'autre partie 13 du volume interne du cylindre 10.

Une extrémité 22 d'un levier 23 est introduit dans un manchon rotatif 24 fixé sur la tige 16 sensiblement au milieu de sa longueur. L'autre extrémité 26 du levier 23 monté en rotation autour d'un axe fixe 25, est articulée sur le noyau plongeur 27 d'un électroaimant 28. Un ressort hélicoïdal 29 est inséré entre l'extrémité du noyau 27 et l'armature 30 de l'électroaimant. La bobine d'excitation 31 de l'électroaimant 28 est connectée à une sortie 32 du circuit de traitement 6 à travers un amplificateur de puissance 33.

Les réservoirs 15 et 18, les canalisations 14 et 21 ainsi que les parties 12 et 13 du volume intérieur du cylindre 10 sont remplis d'un liquide hydraulique.

Le dispositif comporte en pratique une pluralité de cylindres identiques au cylindre 10, ces cylindres étant fixés sur la plaque 11, l'un à côté de l'autre. Les barres des pistons de ces cylindres sont fixées en différents points de la surface de la feuille 1, du côté opposé à la surface réfléchissante. A chaque cylindre est associé un système de commande identique à l'ensemble 15—18—16—23—28 représenté sur la figure. Les bobines des électroaimants des différents systèmes sont connectées respectivement à différentes sorties du circuit de traitement 6.

Le dispositif décrit ci-dessus et illustré par la figure fonctionne de la manière suivante.

Le circuit 6 délivre sur ses sorties des signaux électriques élémentaires successifs qui au départ peuvent être d'amplitude arbitraire et de signe quelconque. Grâce au ressort 29, travaillant en compression, qui s'oppose à la force d'attraction de l'électroaimant 28, un signal électrique appliqué sur la sortie 32 du circuit 6 provoque un déplacement axial du noyau 27, l'amplitude de ce déplacement étant représentative de celle du signal électrique. Le déplacement du noyau 27 entraine un déplacement axial de la tige 16 dans le sens de la flèche 34. Ce déplacement tend à augmenter le volume interne du réservoir 15 et à diminuer celui du réservoir 18. Il en résulte donc un déplacement du piston 9 dans le sens de la flèche 35 par rapport au plan de référence de la plaque 11, ce déplacement créant une déformation de la feuille 1. Bien entendu, la feuille 1 est suffisamment souple pour que cette déformation ne dépasse pas la limite élastique.

L'amplitude de la déformation de la feuille est très inférieure à celle du déplacement de la tige 16. On voit donc que l'ensemble constitué par les deux réservoirs 15 et 18, la tige 16 et le cylindre 10 muni du piston 9 constitue un réducteur hydraulique de déplacement.

La déformation de la surface réfléchissante du miroir modifie la forme du front d'onde du faisceau laser réfléchi par le miroir. Il en résulte une variation de l'énergie détectée par le récepteur 5 Si cette variation correspond à une augmentation d'énergie, l'amplitude du signal délivré en 32 est augmentée jusqu'à ce que l'énergie détectée par le récepteur soit maximale. Dans le cas contraire, le signe du signal délivré en 31 est inversé. On conçoit ainsi qu'il soit possible de créer successivement, aux différents points de la surface réfléchissante du miroir, des déformations qui permettent de compenser les défauts d'homogénéité du faisceau laser ou les effets des perturbations atmosphériques, afin d'obtenir un éclairement maximal de la cible.

A titre indicatif, l'amplitude des déformations de la surface réfléchissante du miroir peut être de l'ordre de 100 microns, les forces de déformation de la membrane étant d'environ 10 kg. On peut obtenir une déformation de 100 microns par un déplacement de 10 mm de la tige 16, le rapport entre le diamètre du piston et celui de la tige étant de 10. Dans ce cas, la force appliquée à la tige est de 100 g.

L'invention présente l'avantage de permettre de réaliser plus facilement des dispositifs dont les performances répondent aux conditions requises d'amplitude et de force de déformation du miroir. On conçoit en effet qu'il est beaucoup plus facile de réaliser un transducteur électromécanique, tel que l'électroaimant 28, capable de créer de grands déplacements avec de faibles forces que de réaliser un transducteur agissant directement sur le miroir en développant des grandes forces sous de faibles déplacements.

Le mode de réalisation de l'invention représenté sur la figure peut être en principe simplifé en supprimant un des deux réservoirs, par exemple le réservoir 18, le liquide hydraulique contenu dans la partie 13 du volume du cylindre 10 étant enlevé et un ressort étant disposé dans cette partie 12 pour s'opposer aux forces hydrauliques agissant sur le piston 9. Dans ce cas, on peut de plus supprimer le réservoir 15, la tige 16 s'enfonçant alors dans la partie 12 du volume interne du cylindre 10. Mais le dispositif représenté sur la figure permet d'éviter les effets néfastes des phénomènes de cavitation qui peuvent se produire dans le dispositif simplifié entre l'extrémité de la tige 16 et le liquide hydraulique, pour un déplacement très rapide de la tige dans le sens de la flèche 34.

La surface réfléchissante du miroir peut comporter une pluralité d'éléments indépendants, chaque élément étant fixé sur une barre telle que 8. D'autre part l'électroaimant représenté sur la figure peut être remplacé par un moteur pas à pas dont l'arbre est relié à la tige 16 par un mécanisme bien connu capable de transformer le mouvement rotatif du moteur en un mouvement linéaire.

Le dispositif selon l'invention peut être appliqué à la correction d'un front d'onde d'un faisceau laser infrarouge de longueur d'onde 10,6 microns.

**Revendications**

1. Dispositif pour augmenter l'éclairement produit par un faisceau laser sur une cible, comprenant
   — un miroir disposé pour réfléchir le faisceau vers la cible,
   — un circuit électrique de traitement dont une entrée reçoit des signaux de mesure d'éclairement et dont la sortie délivre des signaux de commande pour le miroir,
   — au moins un transducteur électromécanique connecté à la sortie du circuit de traitement, le mouvement créé par le transducteur étant transmis à la surface de réflexion du miroir pour la déformer, la déformation de cette surface étant apte à provoquer une augmentation de l'énergie détectée par le récepteur,
   — et un réducteur hydraulique comportant un cylindre (10) et un piston (9) et étant disposé entre le transducteur (28) et le miroir (1) pour imprimer à la surface réfléchissante du miroir un déplacement d'amplitude plus faible que celle du mouvement créé par le transducteur,
   caractérisé en ce qu'il comporte un récepteur photoélectrique (5) capable de détecter l'énergie du faisceau laser renvoyée par la cible et de fournir lesdits signaux de mesure, et que le piston (9) du réducteur hydraulique est muni d'une barre (8) de commande dont l'extrémité est fixée sur la surface réfléchissante du miroir (1), ce piston divisant le volume du cylindre en deux parties (12, 13), un réservoir hydraulique (15) étant en communication avec une (12) desdites parties, une tige (20) étant prévue, dont une extrémité traverse la paroi du réservoir à travers un orifice (17), cette tige étant reliée mécaniquement au transducteur (28) de façon à coulisser axialement dans l'orifice lorsque le transducteur crée ledit mouvement.

2. Dispositif selon la revendication 1, caractérisé en ce qu'il comporte un autre réservoir hydraulique (18) en communication avec l'autre partie (13) du volume du cylindre (10), l'autre extrémité de la tige traversant la paroi de l'autre réservoir à travers un autre orifice (24).

3. Dispositif selon la revendication 1, caractérisé en ce que le transducteur (28) est un électroaimant muni d'un noyau mobile (27) et de moyens élastiques (29) pour freiner la course du noyau, ce noyau étant relié mécaniquement à la tige (20).

4. Dispositif selon la revendication 1, caractérisé en ce que le transducteur comporte un moteur pas à pas dont l'arbre est relié à la tige par un mécanisme apte à transformer le mouvement rotatif du moteur en un mouvement linéaire.

5. Dispositif selon la revendication 1, caractérisé en ce que la surface réfléchissante du miroir comporte plusieurs éléments indépendants, un de ces éléments étant fixé à la tige.

6. Dispositif selon la revendication 1, caractérisé en ce que la surface réfléchissante du miroir étant continue et flexible, la tige est fixée en un point (7) de cette surface.

## Patentansprüche

1. Vorrichtung zur Erhöhung der von einem Laserbündel auf einem Ziel erzeugten Beleuchtung, mit
— einem Spiegel, der so angeordnet.ist, daß er das Bündel auf das Ziel reflektiert,
— einem elektrischen Vedrarbeitungskreis, von dem ein Eingang Beleuchtungs-Meßsignale zugeführt erhält und dessen Ausgang Steuersignale für den Spiegel liefert,
— mindestens einem elektromechanischen Transduktor, der mit dem Ausgang des Verarbeitungskreises verbunden ist, wobei die vom Transduktor erzeugte Bewegung auf die Reflektionsoberfläche des Spiegels übertragen wird, um sie zu verformen, wobei die Verformung dieser Oberfläche eine Erhöhung der vom Empfänger aufgespürten Energie hervorrufen kann,
— und einem hydraulischen Reduktor, der einen Zylinder (10) und einen Kolben (9) aufweist und zwischen dem Transduktor (28) und dem Spiegel (1) angeordnet ist, um der reflektierenden Oberfläche des Spiegels eine Verschiebung einer geringeren Amplitude als die der vom Transduktor hervorgerufenen Bewegung mitzuteilen,
dadurch gekennzeichnet, daß sie einen lichtelektrischen Empfänger (5) aufweist, der die Energie des vom Ziel zurückgeworfenen Laserbündels erfassen und die Meßsignale liefern kann, und daß der Kolben (9) des hydraulischen Reduktors mit einem Steuerstab (8) ausgestattet ist, dessen Ende auf der reflektierenden Oberfläche des Spiegels (1) befestigt ist, wobei dieser Kolben das Volumen des Zylinders in zwei Teile (12, 13) teilt und ein hydraulisches Reservoir (15) mit einem der beiden Teile (12) in Verbindung steht, wobei eine Stange (20) vorgesehen ist, von der ein Ende die Wand des Reservoirs durch eine Öffnung (17) durchquert und die mechanisch mit dem Transduktor (28) verbunden ist, derart, daß sie axial in der Öffnung gleitet, wenn der Transduktor die Bewegung hervorruft.

2. Vorrichtung nach Anspruch 1, dadurch gekennzeichnet, daß sie ein weiteres hydraulisches Reservoir (18) in Verbindung mit dem anderen Teil (13) des Zylindervolumens (10) aufweist, wobei das andere Ende der Stange die Wand des anderen Reservoirs durch eine Öffnung (24) durchquert.

3. Vorrichtung nach Anspruch 1, dadurch gekennzeichnet, daß der Transduktor (28) ein mit einem beweglichen Kern (27) und elastischen Mitteln (29) zum Bremsen der Bewegung des Kerns ausgerüsteter Elektromagnet ist, wobei dieser Kern mechanisch mit der Stange (20) verbunden ist.

4. Vorrichtung nach Anspruch 1, dadurch gekennzeichnet, daß der Transduktor einen Schrittschaltmotor aufweist, dessen Welle mit der Stange über einen Mechanismus verbunden ist, der die Drehbewegung des Motors in eine lineare Bewegung umsetzen kann.

5. Vorrichtung nach Anspruch 1, dadurch gekennzeichnet, daß die reflektierende Oberfläche des Spiegels mehrere unabhängige Elemente aufweist, wobei eines dieser Elemente an der Stange befestigt ist.

6. Vorrichtung nach Anspruch 1, dadurch gekennzeichnet, daß die reflektierende Oberfläche des Spiegels durchgehend und biegsam ist und die Stange an einem Punkt (7) dieser Oberfläche befestigt ist.

## Claims

1. A device for increasing the illumination of a target produced by a laser beam, comprising:
— a mirror disposed to reflect the laser beam towards the target,
— an electrical processor circuit, one input of which receives illumination measuring signals and the output of which delivers control signals for the mirror,
— at least one electromechanical transducer connected to the output of the processor circuit, the movement created by the transducer being transmitted to the reflecting surface of the mirror for deforming it, the deformation of this surface being capable of provoking an increase of the energy detected by the receiver,
— and a hydraulic reducer comprising a cylinder (10) and a piston (9) and being disposed between the transducer (28) and the mirror (1) for imparting to the reflecting surface a movement of an amplitude which is smaller than that of the movement created by the transducer,
characterised in that it comprises a photoelectric receiver (5) capable of detecting the energy of the laser beam returned by the target and to deliver said measuring signals, and that the piston (9) of the hydraulic reducer is supplied with a control rod (8), the end of which is fixed to the reflecting surface of the mirror (1), this piston dividing the cylinder volume into two parts (12, 13), a hydraulic tank (15) being connected with one (12) of said parts, a plunger (20) being provided, one end of which passes through the wall of the tank via an opening (17), this plunger being mechanically linked to the transducer (28) so as to glide axially in the opening when the transducer creates said movement.

2. A device according to claim 1, characterized in that it comprises a further hydraulic tank (18) in connection with the other part (13) of the cylinder volume (10), the other end of the plunger passing through the wall of the other tank via another opening (24).

3. A device according to claim 1, characterized in that the transducer (28) is an electromagnet having a mobile core (27) and resilient means (29) for restraining the movement of the core, this core being mechanically linked to the plunger (20).

4. A device according to claim 1, characterized in that the transducer comprises a stepper motor, the shaft of which is connected to the plunger by a mechanism capable of transforming the rotating movement of the motor into a linear movement.

5. A device according to claim 1, characterized in that the reflecting surface of the mirror comprises several independent elements, one of these elements being fixed to the plunger.

6. A device according to claim 1, characterized in that, the reflecting surface of the mirror being continuous and flexible, the plunger is fixed to one point (7) of this surface.